# EUROPEAN PATENT SPECIFICATION

(11) **EP 1 838 102 B1**
(45) Date of publication and mention of the grant of the patent: **18.11.2015**
(21) Application number: 05824019.3
(22) Date of filing: 29.12.2005
(51) Int. Cl.: H04N 7/173, H04L 9/32, H04L 29/06

(54) **COMMUNICATION TERMINAL, SYSTEM AND METHOD FOR IMPLEMENTING STREAMING MEDIA SERVICES**
KOMMUNIKATIONSENDGERÄT, SYSTEM UND VERFAHREN ZUR IMPLEMENTIERUNG VON STREAMING-MEDIA-DIENSTEN
PROCEDE, SYSTEME ET TERMINAL DE COMMUNICATION DESTINES A METTRE EN OEUVRE DES SERVICES DE TRANSMISSION MULTIMEDIA EN CONTINU

(30) Priority: 29.12.2004 CN 200410102677
(43) Date of publication of application: 26.09.2007
(73) Proprietor: Huawei Technologies Co., Ltd., Longgang District Shenzhen, Guangdong 518129 (CN)
(72) Inventor: ZHOU, Yunhong, Shenzhen, Guangdong 518129 (CN)
(74) Representative: Körber, Martin Hans
(86) International application number: PCT/CN2005/002365
(87) International publication number: WO 2006/069541

(56) References cited:
- EP-A- 0 901 249
- WO-A-01/14981
- WO-A1-03/107625
- CN-A- 1 378 743
- CN-A- 1 388 931
- CN-A- 1 433 177
- JP-A- 2002 366 779
- US-A1- 2004 148 635

## Description

### Field of the Invention

The present invention relates to the wideband video technology, and more particularly, to a communication terminal and a method for implementing a streaming service in a communication terminal.

### Background of the Invention

Along with the rapid development of wideband technology, various wideband based applications emerge, and wideband based video/audio applications are even rapidly developed and widely applied. On one hand, in a wideband network, two standard videoconferencing communication architectures based on the ITU-T H.323 protocol and the Session Initial Protocol (SIP) are developed, while some videoconferencing communication architectures based on the customized private protocols also exist. In a videoconferencing communication system, through adopting terminals with the videoconferencing function, voice and video data interaction between two parties or among multiple parties can be realized. On the other hand, in a wideband network, there occurs an Internet Protocol (IP) Digital Set Top Box (DSTB) device based on the streaming technology which has the function of surfing, live and on-demand movie or TV program.

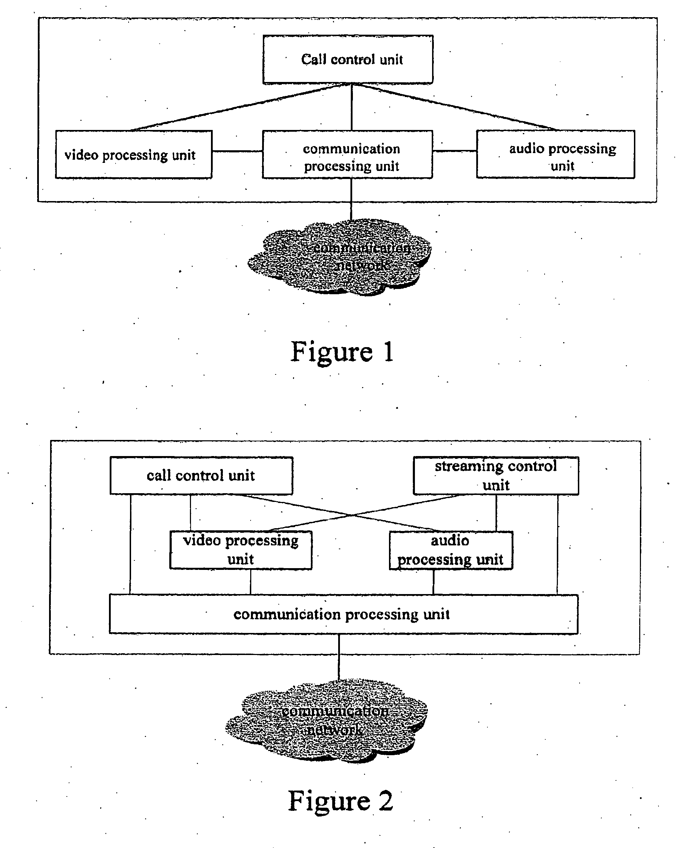

Figure 1 is a schematic diagram illustrating a structure of a communication terminal with the videoconferencing function in prior art. As shown in Figure 1, a communication terminal with the videoconferencing function includes a call control unit, a video processing unit, an audio processing unit and a communication processing unit. The communication processing unit is mainly used for connecting with the communication network, receiving data from the communication network, and sending data to the communication network; the video processing unit is mainly used for the collection, CODEC processing and display of a video image; the audio processing unit is mainly used for the collection, CODEC processing and playing of voice data; the call control unit is responsible for the protocol processing associated with call, controlling a procedure associated with call, and establishing a video/audio conversation with other communication terminals.

As aforementioned, in prior art, a communication terminal and an IP DSTB at the user side are two independent devices; wherein the IP DSTB, without a video/audio communication function, is mainly used for surfing as well as watching movies and TV programs; the communication terminal may implement the video/audio communication without the function for implementing such streaming services as surfing, watching movies and TV programs.

EP-A-0 901 249 discloses an audio/video media server for distributed editing over networks. The media server receives requests from clients on the networks, parses the requests and asynchronously accesses a file system to retrieve the requested media frames. The retrieved media frames are asynchronously transferred to a FIFO buffer, and then are sent in the form of data packets over the networks in response to interrupts generated by a local clock whose clock rate is adjusted according to the fullness of the buffer.

US 2004/148635 discloses an audio and video streaming platform and method for allowing a user to stream audio and video from at least one camera to multiple viewers simultaneously over the Internet. A content provider delivers instructions to the service provider on how to integrate the website of the server provider with the server of the content provider. The server provider allows a user to stream audio and video from at least one camera to multiple viewers simultaneously over the Internet through the website so as to form an audio and video streaming service.

WO 01/14981 discloses a method for delivering audio/video content over a network, including: providing hosting services for customers including storing audio/video content and providing audio/video streaming services for customers, said streaming services including transmitting a Java applet to an end user in real-time and streaming said audio/video content to said end user in real time.

CN-A-1 388931 discloses a method for using a server. A user PC sends a subscription request to a server use subscription management center via the Internet; if the subscription request is accepted, an authentication ID for authenticating the subscription request is created and is sent to the use PC from the server use subscription management center via the Internet. If the user PC sends an assignment request to a stream server, the subscription ID is used to authenticate the user PC.

WO 03107625 discloses a method for controlling client access to data stream from the caching server, including: providing authorization data defining the client's subscription options for the real-time data stream; providing a session rights object defining the client's selections from one or more purchase options; comparing the session rights object with the authorization data to determine client authorization; and if the client is authorized, transferring the data to the client.

CN-A-1 433 177 discloses a method for implementing packet switching stream server in a WCDMA radio network. The transmission frequency band is divided into multiple channels identified by frequencies and codes, and multiple radio access bearers are multiplexed to one channel. The stream server includes: the transmission of continuous media information from a server to a terminal, the transmission of control information from/to the server and/or from/ to the terminal. The media information and the control information are transmitted on the detached radio access bearers.

CN-A-1 378 743 discloses a method for providing secure impulse Pay-Per-view (IPPV) service, including: transmitting an IPPV selection of a user to an access controller, creating encryption information on the access controller; transmitting the encryption information and the fee of the IPPV selection to a user terminal; checking whether the fee exceeds the credit line of the user; if no, creating and transmitting a secure qualification authentication to a server to determine the qualification state of the user; processing the IPPV selection on the server to use the selection by the user.

JP 2002 366779 A discloses a system and method for downloading content files using a communication network and for automatically reproducing the content files in a predefined sequence. The client receives a program file from program serving site via the communication network, and receives contents specified by the received program file from program serving site via the communication network; and reproduce each of the received contents in a reproducing sequence defined by the received program file, using any one of the reproduction engines which corresponds to the type of the received content.

### Summary of the Invention

Embodiments of the present invention provide a communication terminal for implementing a streaming service according to claim 1.

Embodiments of the present invention also provide a method for implementing a streaming service according to claim 3.

As can be seen from the above technical solution, the communication terminal disclosed by embodiments of the present invention includes not only the call control unit, the audio processing unit, the video processing unit and the communication processing unit possessed by the existing communication terminal, but also a streaming control unit which respectively exchanges the communication signaling with the call control unit, the audio processing unit, the video processing unit and the communication processing unit and is used for processing the protocol associated with the playing and control of streaming, and controlling the procedure of streaming service. Therefore, the communication terminal of the present invention implements not only the video/audio communication function, but also the IP Digital Set Top Box (DSTB) function of implementing a steaming service.

The terminal and method disclosed by the present invention for implementing a streaming service can implement a communication terminal based streaming service, obtain the streaming service related information by the registration procedure or call procedure of communication terminal, or by individual streaming service searching request procedure, and request for streaming data according to the streaming service related information, so as to implement a streaming service.

### Brief description of the drawings

Figure 1 is a schematic diagram illustrating a structure of a communication terminal for implementing video/audio communication in prior art.
Figure 2 is a schematic diagram illustrating a structure of a communication terminal with the streaming function in accordance with the embodiments of the present invention;
Figure 3a is a schematic diagram of implementing a streaming service in accordance with a first embodiment of the present invention.
Figure 3b is a schematic diagram illustrating communication signaling interaction of the first embodiment as shown in Figure 3a.
Figure 3c is a schematic diagram illustrating streaming data transmission of the first embodiment as shown in Figure 3a.
Figure 4a is a schematic diagram of implementing a streaming service in accordance with a second embodiment of the present invention.
Figure 4b is a schematic diagram illustrating communication signaling interaction of the second embodiment as shown in Figure 4a.
Figure 5a is a schematic diagram of implementing a streaming service in accordance with a third embodiment of the present invention.
Figure 5b is a schematic diagram illustrating communication signaling interaction of the third embodiment as shown in Figure 5a.
Figure 6a is a schematic diagram of implementing a streaming service in accordance with a fourth embodiment of the present invention.
Figure 6b is a schematic diagram illustrating communication signaling interaction of the fourth embodiment as shown in Figure 6a.

### Detailed description of the invention

In order to make the solution and merits of the present invention clearer, a detailed description of the present invention is hereinafter given with reference to specific embodiments and the accompanying drawings.

According to embodiments of the present invention, a streaming control unit for processing protocols associated with the streaming playing and control is added in a communication terminal, and communication signaling used by the communication terminal is extended accordingly to support a streaming service, so that a streaming service is implemented in the communication terminal.

According to the embodiments of the present invention, a convenient communication terminal based streaming service is provided for users without changing Usage habit of the users through integrating IP Set Top Box (STB) function into the communication terminal. Therefore, the uniform function combining the IP STB with the communication terminal is implemented; and as a result, a user is able to use the communication terminal with a streaming function conveniently and flexibly in the premise of increasing a little cost.

Figure 2 is a schematic diagram illustrating a structure of a communication terminal with the streaming function in accordance with the embodiments of present invention. Referring to Figure 2, the communication terminal of the embodiments mainly includes a streaming control unit, a call control unit, a video processing unit, an audio processing unit and a communication processing unit.

The call control unit, the video processing unit, the audio processing unit and the communication processing unit have the basic function of the corresponding unit in the existing communication terminal respectively. The video/audio communication function of the existing communication terminal may be implemented by the cooperation of these units.

The streaming control unit may process the protocol associated with the streaming playing and control, control the related procedure of a streaming service, respectively connect with the call control unit, the video processing unit, the audio processing unit and the communication processing unit, and implement the streaming function which is not possessed by the existing communication terminal through cooperating with the other units.

The communication terminal performs the interaction with a registration server in the network side to complete the registration procedure of communication terminal during video/audio communication. In the process for calling another communication terminal, the communication terminal may also implement call authentication and address resolution function by interacting with the registration server in the network side, and establish the connection and call with the another communication terminal.

The communication signaling interacted between the communication terminal and the registration server in the network side is extended to support the transmission of streaming related information. Therefore the streaming service is supported by the communication terminal. A new streaming service dedicated communication signaling may be introduced to the interaction between the communication terminal and the network side, so that the streaming service is supported by the communication terminal.

As can be seen that, in comparison with the existing communication terminal, the communication terminal of the embodiments may implement a streaming service while implementing the video/audio communication since the streaming control unit is added and the original communication signaling is extended or a new streaming service communication signaling is added.

The communication terminal, system and method for implementing a streaming service in accordance with embodiments of the present invention are hereinafter described in detail with respect to four preferred embodiments for implementing a streaming service.

### First embodiment:

In this embodiment, a communication terminal obtains the streaming service related information in a registration procedure. In this way, such services as the on-demand service and the live streaming service will be provided to a user of the communication terminal via a programming list, or a streaming advertisement is automatically played to the user of the communication terminal when the communication terminal is idle.

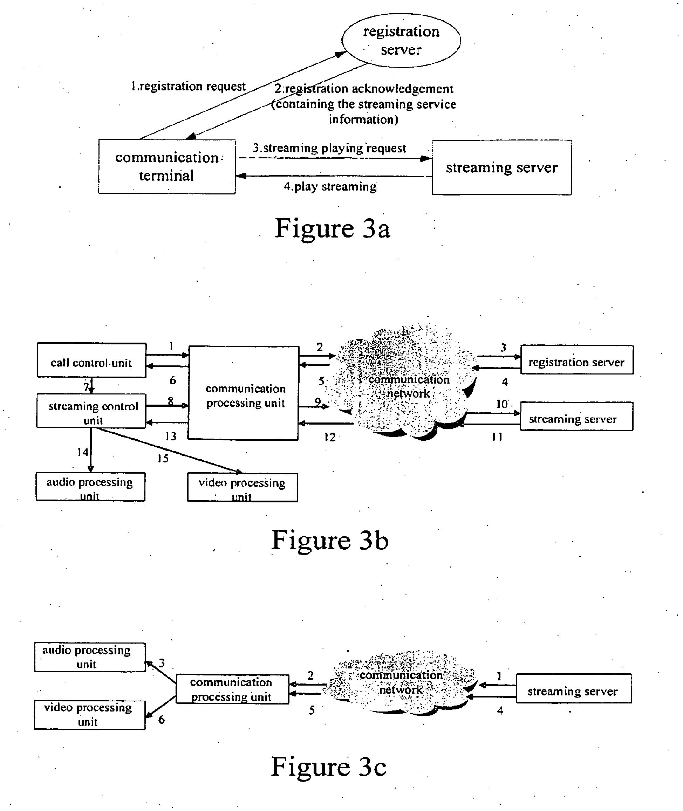

Figure 3a is a schematic diagram of implementing streaming service in accordance with the first embodiment of the present invention. Referring to Figure 3a, in the first embodiment, the system for implementing a streaming service includes a communication terminal with the streaming function, a registration server in a network side and a streaming server in the network side.

The registration server in the network side is mainly used for implementing the registration, authentication and called number resolution function for the communication terminal. The streaming service related information such as the streaming programming list information and the streaming advertisement information is stored in the registration server. The streaming programming list information includes names of multiple streaming programs and Uniform Resource Locator (URL) links of the streaming programs; the streaming advertisement information includes names of the streaming advertisements and URL links of the streaming advertisements. The streaming programming list information may also only include single streaming program information, i.e. the URL link of single streaming program.

Streaming data as streaming programs and streaming advertisements is stored in the streaming server in the network side mainly used for implementing the streaming on-demand and live service functions.

Referring to Figure 3a, in the first embodiment, the method for implementing a streaming service specifically includes the following steps.

First, the communication terminal sends a registration request to the registration server.

Second, the registration service authenticates the communication terminal, returns a successful registration acknowledgement message containing the streaming service related information to the communication terminal after the communication terminal is authenticated. The streaming service related information is the streaming programming list information and the streaming advertisement information, etc..

Third, after receiving the successful registration acknowledgement message returned by the registration server, the communication terminal extracts the streaming programming list information or the streaming advertisement information. If the streaming programming list information is extracted, the communication terminal displays the streaming programming list to the user, and requests the streaming server for playing the streaming program selected by the user after receiving the program selected by the user; if the streaming advertisement information is extracted, the communication terminal requests the streaming server for playing a designated streaming advertisement in idle state, i.e., when the communication terminal does not use a service and does not perform any operation.

Fourth, the streaming server plays the streaming program or advertisement for the communication terminal, i.e., returns the streaming data corresponding to the streaming program or advertisement requested by the communication terminal to the communication terminal.

Figure 3b is a schematic diagram illustrating the communication signaling interaction of the first embodiment. Referring to Figure 3b, the call control unit sends a registration request to the registration server via the communication processing unit and the communication network; the registration server returns a successful registration acknowledgement message to the communication processing unit via the communication network after the communication terminal is authenticated; the communication processing unit forwards the successful registration acknowledgement message to the call control unit for processing; the call control unit extracts the streaming service related information from the successful registration acknowledgement message and forwards the streaming service related information to the streaming control unit; if the streaming service related information includes the streaming programming list information, the streaming control unit displays the streaming programming list for the user and receives the selection of the user; the streaming control unit initiates a connection request for the streaming program or streaming advertisement selected by the user to the streaming server via the communication processing unit and the communication network; the streaming server returns the connection request result to the communication processing unit via the communication network; the communication process unit forwards the connection request result to the streaming control unit for processing; the streaming control unit instructs the audio processing unit and the video processing unit to receive and play the streaming data after the connection is successful.

Figure 3c is a schematic diagram of playing streaming data in accordance with the first embodiment. Referring to Figure 3c, the streaming server sends an audio media stream and a video media stream to the communication processing unit via the communication network; the communication processing unit forwards the received audio media stream to the audio processing unit for decoding and playing, and forwards the received video media stream to the video processing unit for decoding and playing.

In this way, a communication service and a streaming service are combined, which provides the user of the communication terminal with the streaming on-demand and live function conveniently based on the communication service procedure, and provides the service operator with the possibility of value-added service such as a streaming advertisement.

### Second embodiment:

In this embodiment, the communication terminal initiates a streaming on-demand and live service by the normal call method, and provides a user of the communication terminal with the streaming service function like an automatic station.

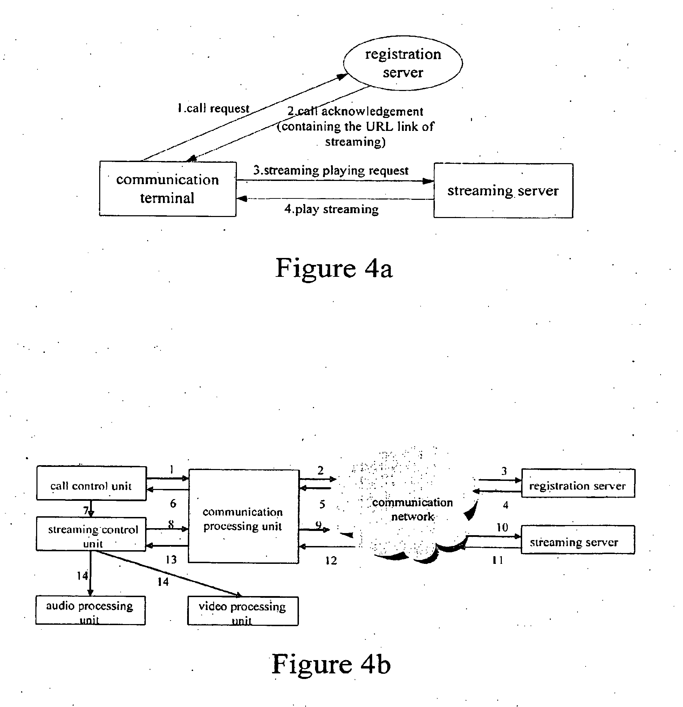

Figure 4a is a schematic diagram of implementing a streaming service in accordance with the second embodiment of the present invention. Referring to Figure 4a, in the second embodiment, the system for implementing a streaming service includes a communication terminal with the streaming function, a registration server in the network side and a streaming server in the network side.

The registration server in the network side stores not only the streaming service related information described in the first embodiment, but also the correspondence relationship between streaming service number and the streaming service related information. The registration server searches and returns the streaming service related information corresponding to the streaming service number after receiving the streaming service number.

Referring to Figure 4a, in the second embodiment, the method for implementing a streaming service specifically includes the following steps.

First, the communication terminal sends to the registration server a call request, the called number is a streaming service number.

Second, the registration server authenticates the communication terminal, extracts the called number after the communication terminal is authenticated; if the extracted number is a streaming service number, searches for the streaming service related information corresponding to the streaming service number according to the saved correspondence relationship between streaming service number and the streaming service related information, and returns a call acknowledgement message containing the streaming service related information corresponding to the streaming service number back to the communication terminal. In this embodiment, the streaming service related information generally includes only the URL link of single streaming program.

Third, if the call acknowledgement message includes the streaming service related information which is the URL link of single streaming program, the communication terminal requests for playing streaming data indicated by the URL link of the streaming program after receiving the call acknowledgement message.

Fourth, the streaming server plays a streaming program for the communication terminal, i.e. returns the streaming data corresponding to the streaming program requested by the communication terminal to the communication terminal.

Figure 4b is a schematic diagram illustrating the communication signaling interaction of the second embodiment. Referring to Figure 4b, the call control unit sends a call request to the registration server in the network side via the communication processing unit and the communication network; the registration server extracts the called number, and returns a call acknowledgement message containing the streaming service related information corresponding to the called number to the communication processing unit after the communication terminal is authenticated; the communication processing unit forwards the call acknowledgement message to the call control unit; the call control unit extracts the streaming service related information such as the URL link of single streaming program and forwards the streaming service related information to the streaming control unit; the streaming control unit initiates a connection request for the single streaming program to the streaming server via the communication processing unit; the streaming server returns the connection request result to the communication processing unit via the communication network; the communication process unit forwards the connection request result to the streaming control unit for processing; the streaming control unit instructs the audio processing unit and the video processing unit to receive and play the data after the connection is successful.

The playing of streaming data of this embodiment is the same as that of the first embodiment as shown in Figure 3c, which will not be described in detail herein.

In this way, such services as the streaming on-demand and live service may be implemented by the conventional method for dialing a phone number, which will be accepted and used by the user of the common communication terminal easily and makes it possible for a service operator to provide various value-added services according to such a simple and convenient method.

### Third embodiment:

In this embodiment, the communication terminal initiates an individual streaming service searching request after the registration procedure is finished. As a result, it is needless to extend the existing registration procedure.

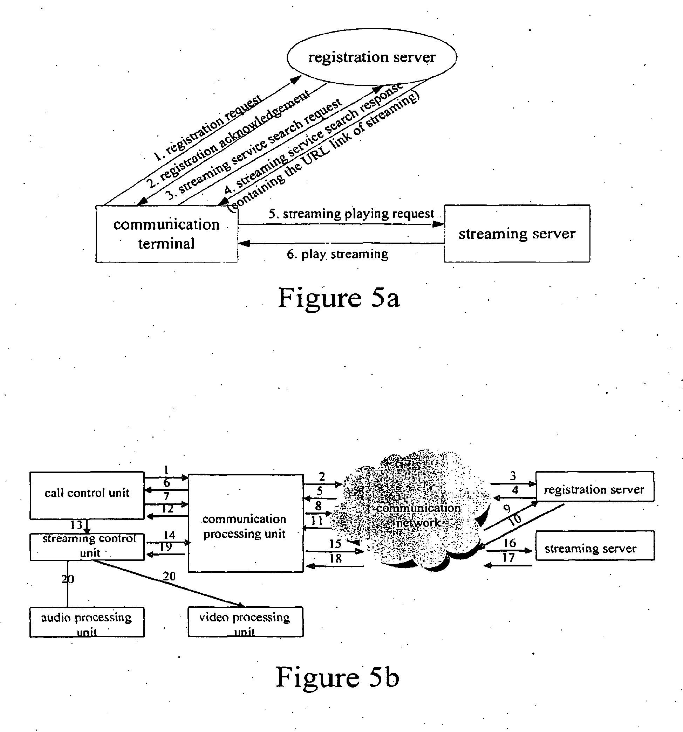

Figure 5a is a schematic diagram of implementing a streaming service in accordance with a third embodiment of the present invention. Referring to Figure 5a, in the third embodiment, the system for implementing a streaming service includes a communication terminal with the streaming function, a registration server in a network side and a streaming server in the network side.

The function of the registration server and the streaming server is the same as that of the first embodiment.

Referring to Figure 5a, in the third embodiment, the method for implementing a streaming service specifically includes the following steps.

First, the communication terminal sends a registration request to the registration server.

Second, the registration server authenticates the communication terminal, returns a successful registration acknowledgement message containing no streaming service related information to the communication terminal after the communication terminal is authenticated.

Third, the communication terminal sends a streaming service searching request to the registration server.

Fourth, after receiving the streaming service searching request, the registration server returns a streaming service searching response containing the streaming service related information to the communication terminal.

Fifth, the communication terminal requests the streaming server for playing streaming data according to the streaming service related information. The detailed implementation method of this embodiment is the same as the third step and the fourth step of the first embodiment, which will not be further described herein.

Figure 5b is a schematic diagram illustrating the communication signaling interaction of the third embodiment. Referring to Figure 5b, the call control unit sends a registration request to the registration server via the communication processing unit and the communication network; the registration server returns a successful registration acknowledgement message to the communication processing unit via the communication network after the communication terminal is authenticated; the communication processing unit forwards the successful registration acknowledgement message to the call control unit; the call control unit sends a streaming service searching request to the registration server via the communication processing unit and the communication network; the registration server returns to the communication processing unit a streaming service searching response containing the streaming service related information via the communication network; the communication processing unit forwards the streaming service searching response to the call control unit; the call control unit extracts the streaming service related information from the streaming service searching response and forwards it to the streaming control unit; if the streaming service related information includes the streaming programming list information, the streaming control unit displays the streaming programming list for the user and receives the selection of the user; the streaming control unit initiates a connection request for the streaming program or streaming advertisement selected by the user to the streaming server via the communication processing unit and the communication network; the streaming server returns the connection request result to the communication processing unit via the communication network; the communication process unit forwards the connection request result to the streaming control unit for processing; the streaming control unit instructs the audio processing unit and the video processing unit to receive and play the data after the connection is successful.

The playing of streaming data of this embodiment is the same as that of the first embodiment as shown in Figure 3c, which will no be described in detail herein.

In this way, since a dedicated streaming search request and response signaling are introduced it is needless to extend the existing standard signaling of registration procedure.

### Fourth embodiment:

The difference of this embodiment from the third embodiment is that, the registration server is not responsible for streaming service searching, and a dedicated streaming service server having the streaming service searching function is used; the communication terminal requests to search a streaming service from the streaming service server instead of the registration server.

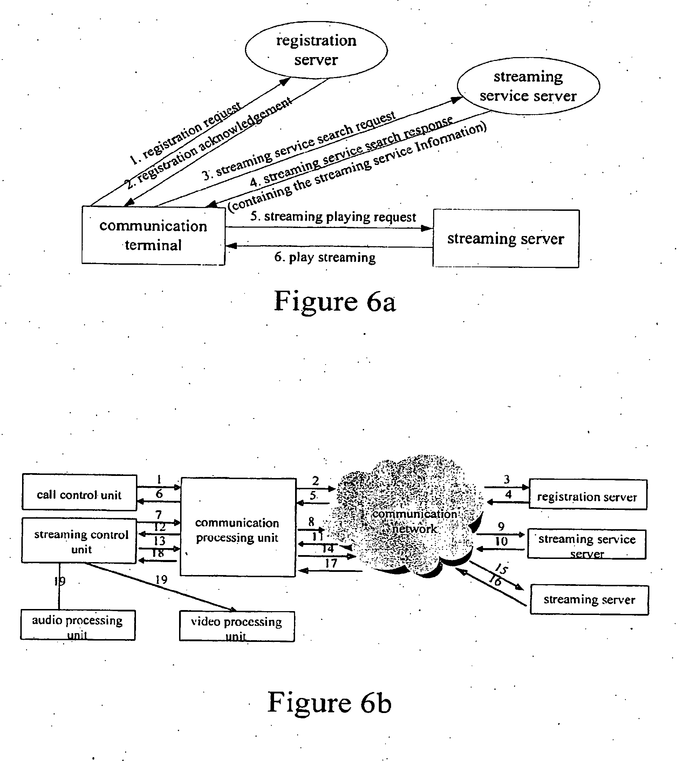

Figure 6a is a schematic diagram of a streaming service procedure in accordance with a fourth embodiment of the present invention. Referring to Figure 6a, in the fourth embodiment, the system for implementing a streaming service includes a communication terminal with the streaming function, a registration server in the network side, a streaming server in the network side and a streaming service server in the network side.

The difference of this embodiment from the third embodiment is that, the registration server does not save the streaming service related information; the streaming service server saves the streaming service related information, and provides the communication terminal with the streaming service searching function.

Referring to Figure 6a, in the fourth embodiment, the method for implementing a streaming service specifically includes the following steps.

First, the communication terminal sends a registration request to the registration server.

Second, the registration server authenticates the communication terminal, returns a successful registration acknowledgement message containing no streaming service related information to the communication terminal after the communication terminal is authenticated.

Third, the communication terminal sends a streaming service searching request to the streaming service server.

Fourth, after receiving the streaming service searching request, the streaming service server returns the streaming service related information to the communication terminal.

Fifth, the communication terminal requests the streaming server for playing streaming data according to the received streaming service related information. The detailed implementation method of this embodiment is the same as the third step and the fourth step of the first embodiment, which will not be further described herein.

Figure 6b is a schematic diagram illustrating the communication signaling interaction of the fourth embodiment. Referring to Figure 6b, the call control unit sends a registration request to the registration server via the communication processing unit and the communication network; the registration server returns a successful registration acknowledgement message to the communication processing unit via the communication network after the communication terminal is authenticated; the communication processing unit forwards the successful registration acknowledgement message to the call control unit for processing; the streaming control unit sends a streaming service searching request to the streaming service server via the communication processing unit and the communication network; the streaming service server returns to the communication processing unit a streaming service searching response containing the streaming service related information via the communication network; the communication processing unit forwards the streaming service searching response to the call control unit; the call control unit extracts the streaming service related information from the streaming service searching response and forwards the streaming service related information to the streaming control unit; if the streaming service related information includes the streaming programming list information, the streaming control unit displays the streaming programming list for the user and receives the selection of the user; the streaming control unit initiates a connection request for the streaming program or streaming advertisement selected by the user to the streaming server via the communication processing unit and the communication network; the streaming server returns the connection request result to the communication processing unit via the communication network; the communication process unit forwards the connection request result to the streaming control unit for processing; the streaming control unit instructs the audio processing unit and the video processing unit to receive and play the data after the connection is successful.

The playing of streaming data of this embodiment is the same as that of the first embodiment as shown in Figure 3c, which will not be described in detail herein.

The preferred embodiments of the present invention can be modified appropriately during specific implementation to meet the detailed requirements of specific cases. It is thereby understood that the specific embodiments described in this disclosure are demonstrative rather than limiting the protection scope of the present invention.

## Claims

1. A communication terminal for implementing a streaming service, comprising:
a call control unit, an audio processing unit, a video processing unit and a communication processing unit; the call control unit, the audio processing unit, the video processing unit and the communication processing unit are connected to each other to implement video or audio communication;
the communication terminal performs interaction with a registration server in the network side to complete a registration procedure during video or audio communication;
**characterized in that** the communication terminal further comprises:
a streaming control unit for processing protocols associated with streaming playing and controlling, and for controlling the related procedure of a streaming service;
the call control unit is configured for initiating (1; 3) a registration request to the registration server via the communication processing unit and a communication network;
the communication processing unit is configured for obtaining a successful registration acknowledge message from the registration server via the communication network after the communication terminal is authenticated, and forwarding the successful registration acknowledge message to the call control unit;
the call control unit is further configured for extracting streaming service related information from the successful registration acknowledge message and forwarding the streaming service related information to the streaming control unit, wherein the streaming service related information is the streaming programming list information;
the streaming control unit is configured for displaying a streaming programming list to a user if the streaming programming list information is extracted, receiving the selection of the user, and initiating (3; 5) a connection request for playing streaming data corresponding to the streaming program selected by the user to the streaming server via the communication processing unit and the communication network;
the communication processing unit is configured to obtain the connection request result from the streaming server via the communication network, forwarding the connection request result to the streaming control unit;
the streaming control unit is further configured to instruct the audio processing unit and the video processing unit to receive and play (4; 6) the streaming data after the connection is successful.

2. The communication terminal of Claim 1, wherein an interactive communication signaling between the streaming control unit and the call control unit, the audio processing unit, the video processing unit or the communication processing unit comprises a communication signaling supporting the streaming service related information transmission.

3. A method for a communication terminal implementing a streaming service, **characterized in** the steps of:
initiating (1; 3) a registration request for streaming service related information comprising streaming programming list information to a registration server via a communication network;
receiving (2; 4) a message containing the streaming service related information from the registration server via the communication network after the communication terminal is authenticated by the registration server, wherein the streaming service related information is the streaming programming list information;
extracting streaming programming list information from the message;
displaying a streaming programming list to a user if the streaming programming list information is extracted;
receiving a streaming program selected by the user;
initiating (3; 5) a connection request for playing streaming data corresponding to the streaming program selected by the user to the streaming server according to the streaming service related information; and
playing (4; 6) the streaming data returned by the network side after the requesting is successful;
wherein the request for the streaming service related information is a registration request in which the communication terminal performs interaction with a registration server in the network side to complete a registration procedure during video or audio communication;
the message containing the streaming service related information is a successful registration acknowledge message containing the streaming service related information.

4. The method of Claim 3, wherein the request for the streaming service related information is a call request whose a called number is a streaming service number;
the method further comprises: after the communication terminal is authenticated, extracting, by the registration server, the streaming service number, obtaining the streaming service related information corresponding to the streaming service number according to a relationship between streaming service numbers and the streaming service related information.

5. The method of Claim 3, wherein the streaming programming list information comprises as least one name of a streaming program and a Uniform Resource Locator, URL, link of the streaming program; streaming advertisement information comprises a URL link of streaming advertisement.

6. The method of Claim 3, further comprising:
if the streaming service related information is the streaming advertisement information, requesting the streaming server for the streaming data corresponding to the streaming advertisement information in idle time, and playing the streaming data returned by the streaming server.

## Patentansprüche

1. Datenübertragungsendgerät zum Realisieren eines Streamingdienstes, das umfasst:
eine Anrufsteuereinheit, eine Audioverarbeitungseinheit, eine Videoverarbeitungseinheit und eine Datenübertragungsverarbeitungseinheit, wobei die Anrufsteuereinheit, die Audioverarbeitungseinheit, die Videoverarbeitungseinheit und die Datenübertragungsverarbeitungseinheit miteinander verbunden sind, um Video- oder Audiodatenübertragung zu realisieren;
das Datenübertragungsendgerät führt eine Interaktion mit einem netzwerkseitigen Registrierungsserver durch, um eine Registrierungsprozedur während einer Video-oder Audiodatenübertragung auszuführen,
**dadurch gekennzeichnet, dass** das Datenübertragungsendgerät außerdem umfasst:
eine Streamingsteuereinheit zum Verarbeiten von Protokollen, die mit einem Abspielen und Steuern hinsichtlich des Streamings in Zusammenhang stehen, und zum Steuern der dazu in Beziehung stehenden Prozedur eines Streamingdienstes;
die Anrufsteuereinheit ist so konfiguriert, dass sie über die Datenübertragungsverarbeitungseinheit und ein Datenübertragungsnetzwerk eine Registrierungsanforderung an den Registrierungsserver einleitet (1; 3),
die Datenübertragungsverarbeitungseinheit ist so konfiguriert, dass sie eine erfolgreiche Registrierungsbestätigungsnachricht von dem Registrierungsserver über das Datenübertragungsnetzwerk bezieht, nachdem das Datenübertragungsendgerät authentifiziert wurde, und die erfolgreiche Registrierungsbestätigungsnachricht an die Anrufsteuereinheit weiterleitet;
die Anrufsteuereinheit ist außerdem so konfiguriert, dass sie den Streamingdienst betreffende Informationen aus der erfolgreichen Registrierungsbestätigungsnachricht extrahiert und die den Streamingdienst betreffenden Informationen an die Streamingsteuereinheit weiterleitet, wobei es sich bei den den Streamingdienst betreffenden Informationen um die Informationen zur Streaming-Programmliste handelt;
die Streamingsteuereinheit ist so konfiguriert, dass sie einem Benutzer eine Streaming-Programmliste anzeigt, wenn die Informationen zur Streaming-Programmliste extrahiert werden, die Auswahl des Benutzers empfängt und eine Verbindungsanforderung zum Abspielen von Streamingdaten, die dem von dem Benutzer ausgewählten gestreamten Programm entsprechen, an den Streamingserver über die Datenübertragungsverarbeitungseinheit und das Datenübertragungsnetzwerk einleitet (3; 5);
die Datenübertragungsverarbeitungseinheit ist so konfiguriert, dass sie das Ergebnis der Verbindungsanforderung von dem Streamingserver über das Datenübertragungsnetzwerk bezieht und das Ergebnis der Verbindungsanforderung an die Streamingsteuereinheit weiterleitet;
die Streamingsteuereinheit ist außerdem so konfiguriert, dass sie die Audioverarbeitungseinheit und die Videoverarbeitungseinheit anweist, die Streamingdaten zu empfangen und abzuspielen (4; 6), sobald die Verbindung erfolgreich ist.

2. Datenübertragungsendgerät nach Anspruch 1, wobei eine interaktive Datenübertragungssignalisierung zwischen der Streamingsteuereinheit und der Anrufsteuereinheit, der Audioverarbeitungseinheit, der Videoverarbeitungseinheit oder der Datenübertragungsverarbeitungseinheit eine Datenübertragungssignalisierung umfasst, die ein Übertragen der den Streamingdienst betreffenden Informationen unterstützt.

3. Verfahren für ein Datenübertragungsendgerät, durch das ein Streamingdienst realisiert wird, **gekennzeichnet durch** die Schritte:
Einleiten (1; 3) einer Registrierungsanforderung für den Streamingdienst betreffende Informationen, die Informationen zu einer Streaming-Programmliste umfassen, an einen Registrierungsserver über ein Datenübertragungsnetzwerk;
Empfangen (2; 4) einer Nachricht, die die den Streamingdienst betreffenden Informationen enthält, von dem Registrierungsserver über das Datenübertragungsnetzwerk nach dem Authentifizieren des Datenübertragungsendgeräts **durch** den Registrierungsserver, wobei es sich bei den den Streamingdienst betreffenden Informationen um die Informationen zur Streaming-Programmliste handelt;
Extrahieren von Informationen zur Streaming-Programmliste aus der Nachricht;
Anzeigen einer Streaming-Programmliste gegenüber einem Benutzer, wenn die Informationen zur Streaming-Programmliste extrahiert werden;
Empfangen eines von dem Benutzer ausgewählten **durch** Streaming übertragenen Programms;
Einleiten (3; 5) einer Verbindungsanforderung zum Abspielen von Streamingdaten, die dem von dem Benutzer ausgewählten **durch** Streaming übertragenen Programm entsprechen, an den Streamingserver gemäß den den Streamingdienst betreffenden Informationen und
Abspielen (4; 6) der Streamingdaten, die von der Netzwerkseite nach einem erfolgreichen Anfordern zurückgegeben werden,
wobei die Anforderung von den Streamingdienst betreffenden Informationen eine Registrierungsanforderung ist, bei der das Datenübertragungsendgerät eine Interaktion mit einem netzwerkseitigen Registrierungsserver durchführt, um eine Registrierungsprozedur während einer Video- oder Audiodatenübertragung abzuschließen;
die den Streamingdienst betreffende Informationen enthaltende Nachricht eine erfolgreiche Registrierungsbestätigungsnachricht ist, die die den Streamingdienst betreffenden Informationen enthält.

4. Verfahren nach Anspruch 3, wobei die Anforderung von den den Streamingdienst betreffenden Informationen eine Anrufanforderung ist, deren angerufene Nummer eine Nummer eines Streamingdienstes ist;
das Verfahren außerdem umfasst: nach dem Authentifizieren des Datenübertragungsendgeräts Extrahieren der Nummer des Streamingdienstes mithilfe des Registrierungsservers, Beziehen der den Streamingdienst betreffenden Informationen, die der Nummer des Streamingdienstes entsprechen, gemäß einer Beziehung zwischen Nummern von Streamingdiensten und den den Streamingdienst betreffenden Informationen.

5. Verfahren nach Anspruch 3, wobei die Informationen zur Streaming-Programmliste mindestens einen Namen eines durch Streaming übertragenen Programms und einen URL-Link (uniform resource locator link, URL link) des durch Streaming übertragenen Programms umfassen, wobei durch Streaming übertragene Werbeinformationen einen URL-Link zu durch Streaming übertragener Werbung umfassen.

6. Verfahren nach Anspruch 3, das außerdem umfasst:
wenn es sich bei den den Streamingdienst betreffenden Informationen um durch Streaming übertragene Werbeinformationen handelt, Anfordern der Streamingdaten, die den durch Streaming übertragenen Werbeinformationen entsprechen, von dem Streamingserver in Leerlaufzeit und Abspielen der von dem Streamingserver zurückgegebenen Streamingdaten.

## Revendications

1. Terminal de communication pour mettre en oeuvre un service de diffusion en continu, comprenant :
une unité de commande d'appel, une unité de traitement audio, une unité de traitement vidéo et une unité de traitement de communication ; l'unité de commande d'appel, l'unité de traitement audio, l'unité de traitement vidéo et l'unité de traitement de communication sont connectées les unes aux autres pour mettre en oeuvre une communication vidéo ou audio ;
le terminal de communication interagit avec un serveur d'enregistrement côté réseau pour réaliser une procédure d'enregistrement durant une communication audio ou vidéo ;
**caractérisé en ce que** le terminal de communication comprend en outre :
une unité de commande de diffusion en continu pour traiter des protocoles associés à une reproduction et une commande de diffusion en continu, et pour commander la procédure associée d'un service de diffusion en continu ;
l'unité de commande d'appel est configurée pour lancer (1 ; 3) une requête d'enregistrement auprès du serveur d'enregistrement par l'intermédiaire de l'unité de traitement de communication et d'un réseau de communication ;
l'unité de traitement de communication est configurée pour obtenir un message d'acquittement d'enregistrement positif depuis le serveur d'enregistrement par l'intermédiaire du réseau de communication après l'authentification du terminal de communication, et renvoyer le message d'acquittement d'enregistrement positif à l'unité de commande d'appel ;
l'unité de commande d'appel est configurée en outre pour extraire des informations relatives au service de diffusion en continu à partir du message d'acquittement d'enregistrement positif et renvoyer les informations relatives au service de diffusion en continu à l'unité de commande de diffusion en continu, dans lequel les informations relatives au service de diffusion en continu sont les informations de liste de programmation de diffusion en continu ;
l'unité de commande de diffusion en continu est configurée pour afficher une liste de programmation de diffusion en continu à un utilisateur si les informations de liste de programmation de diffusion en continu sont extraites, recevoir la sélection de l'utilisateur, et lancer (3 ; 5) une requête de connexion pour reproduire des données de diffusion en continu correspondant au programme de diffusion en continu sélectionné par l'utilisateur auprès du serveur de diffusion en continu par l'intermédiaire de l'unité de traitement de communication et du réseau de communication ;
l'unité de traitement de communication est configurée pour obtenir le résultat de requête de connexion depuis le serveur de diffusion en continu par l'intermédiaire du réseau de communication, renvoyant le résultat de requête de connexion à l'unité de commande de diffusion en continu ;
l'unité de commande de diffusion en continu est configurée en outre pour charger l'unité de traitement audio et l'unité de traitement vidéo de recevoir et de reproduire (4 ; 6) les données de diffusion en continu après l'établissement de la connexion.

2. Terminal de communication selon la revendication 1, dans lequel une signalisation de communication interactive entre l'unité de commande de diffusion en continu et l'unité de commande d'appel, l'unité de traitement audio, l'unité de traitement vidéo ou l'unité de traitement de communication comprend une signalisation de communication qui supporte la transmission d'informations relatives au service de diffusion en continu.

3. Procédé de mise en oeuvre par un terminal de communication d'un service de diffusion en continu, **caractérisé par** les étapes consistant à :
lancer (1 ; 3) une requête d'enregistrement demandant des informations relatives au service de diffusion en continu comprenant des informations de liste de programmation de diffusion en continu auprès d'un serveur d'enregistrement par l'intermédiaire d'un réseau de communication ;
recevoir (2 ; 4) un message contenant les informations relatives au service de diffusion en continu depuis le serveur d'enregistrement par l'intermédiaire du réseau de communication après l'authentification du terminal de communication par le serveur d'enregistrement, les informations relatives au service de diffusion en continu étant les informations de liste de programmation de diffusion en continu ;
extraire des informations de liste de programmation de diffusion en continu depuis le message ;
afficher une liste de programmation de diffusion en continu à un utilisateur si les informations de liste de programmation de diffusion en continu sont extraites ;
recevoir un programme de diffusion en continu sélectionné par l'utilisateur ;
lancer (3 ; 5) une requête de connexion pour reproduire des données de diffusion en continu correspondant au programme de diffusion en continu sélectionné par l'utilisateur auprès du serveur de diffusion en continu en fonction des informations relatives au service de diffusion en continu ; et
reproduire (4 ; 6) les données de diffusion en continu renvoyées par le côté réseau après l'octroi de la requête ;
dans lequel la requête demandant les informations relatives au service de diffusion en continu est une requête d'enregistrement dans laquelle le terminal de communication interagit avec un serveur d'enregistrement côté réseau pour réaliser une procédure d'enregistrement durant une communication vidéo ou audio ;
le message contenant les informations relatives au service de diffusion en continu est un message d'acquittement d'enregistrement positif contenant les informations relatives au service de diffusion en continu.

4. Procédé selon la revendication 3, dans lequel la requête demandant les informations relatives au service de diffusion en continu est une requête d'appel dont un numéro appelé est un numéro de service de diffusion en continu ;
le procédé comprenant en outre : après l'authentification du terminal de communication, l'extraction, par le serveur d'enregistrement, du numéro du service de diffusion en continu, l'obtention des informations relatives au service de diffusion en continu correspondant au numéro du service de diffusion en continu en fonction d'une relation entre des numéros de service de diffusion en continu et les informations relatives au service de diffusion en continu.

5. Procédé selon la revendication 3, dans lequel les informations de liste de programmation de diffusion en continu comprennent au moins un nom d'un programme de diffusion en continu et d'un lien de localisateur de ressource uniforme, URL, du programme de diffusion en continu ; les informations d'annonce de diffusion en continu comprennent un lien URL d'annonce de diffusion en continu.

6. Procédé selon la revendication 3, comprenant en outre :
si les informations relatives au service de diffusion en continu sont les informations d'annonce de diffusion en continu, la requête auprès du serveur de diffusion en continu des données de diffusion en continu correspondant aux informations d'annonce de diffusion en continu durant le temps de repos, et la reproduction des données de diffusion en continu renvoyées par le serveur de diffusion en continu.
